# NEW EUROPEAN PATENT SPECIFICATION

(11) **EP 2 938 208 B2**
(45) Date of publication and mention of the opposition decision: **02.08.2023**
(45) Mention of the grant of the patent: 17.05.2017
(21) Application number: 13817687.0
(22) Date of filing: 23.12.2013
(51) Int. Cl.: A23L 29/10

(54) **EMULSIFIER SYSTEM**
EMULGATORSYSTEM
SYSTÈME ÉMULSEUR

(30) Priority: 28.12.2012 EP 12199581
(43) Date of publication of application: 04.11.2015
(73) Proprietor: Société des Produits Nestlé S.A., 1800 Vevey (CH)
(72) Inventor: PIPE, Christopher James, CH-1006 Lausanne (CH); GEHIN-DELVAL, Cécile, 25370 Les Hôpitaux Neufs (FR); MORA, Frederico, 1110 Morges (CH); VIEIRA, Josélio Batista, York YO31 8LG (GB); HUSSON, Jwanro, 37390 Notre Dame d'Oé (FR)
(74) Representative: D Young & Co LLP
(86) International application number: PCT/EP2013/077882
(87) International publication number: WO 2014/102230

(56) References cited:
- EP-A1- 0 560 609
- EP-A1- 1 269 855
- EP-A1- 2 185 003
- EP-A1- 2 491 797
- GB-A- 2 006 603
- ILLY et al.: "Neglected Food Bubbles: The Espresso Coffee Foam", Food Biophysics, vol. 6, no. 3, 30 March 2011 (2011-03-30), pages 335-348,
- Use of nanoparticles and microparticulates in the formation and stabilisation of food emulsions: "Trends in Food Science & Technology", Dickinson, vol. 24, no. 1 , pages 4-12,

## Description

### TECHNICAL FIELD

The present invention relates to emulsions, more particularly to emulsifier systems and to the use of said emulsifier systems for the stabilisation of emulsions. It also relates to emulsifier systems which may be used in the manufacture of food products and to food products comprising this emulsifier system.

### BACKGROUND OF THE INVENTION

The consumers demand on food or beverage products has increased over the past decades. Today, the modern consumer demands food products which have been sustainably produced and are comprised of food source ingredients.

However, a large portion of the food and beverage products produced today are comprised of synthetically produced ingredients.

Emulsions are widely used in food technology, for instance as a means to improve the nutritional profile of food products by enabling fat content reduction, and/or the incorporation of water soluble nutrients and flavourings. Emulsions are normally obtained with the aid of different molecular emulsifying agents like emulsifiers, proteins or amphiphilic polymers (also called stabilizers). These ingredients are indispensable to the manufacture of stable commercially acceptable emulsion based products. Efficient emulsifier systems already exist, but these are often based on synthetic ingredients.

Food source ingredients are ingredients derived from a vegetable source, an animal source, a microbial source and/or a fungi source. Synthetic ingredients on the other hand are produced artificially by chemical modification(s).

Synthetic ingredients are not regarded as "food source ingredients" and products comprising synthetically produced ingredients may therefore be rejected by the consumers. Replacing synthetic ingredients by food source ingredients may represent a key change for the consumer and create a competitive advantage. Thus, there is need to provide "food source ingredients" to improve the capability to provide and stabilise emulsion characteristics.

Thus, there is a need in the industry to replace synthetically produced ingredients with food source ingredients thereby meeting the increasing demands from the consumer.

Natural ingredients with emulsifying properties are known, but they are usually not as efficient as synthetic emulsifiers and/or present other drawbacks.

In particular, egg yolk has been known for a long time for its emulsifying properties. EP2185003 describes a stabiliser system for frozen confectioneries comprising egg yolk as natural emulsifier associated with starch and citrus fibres. However, the use of egg yolk is considerably limited due to the stringent processing conditions required for sanitary reasons, and the storage conditions for required for non-cooked products. Also for many food products it is not desired to have egg yolk as an ingredient. Also the use of egg yolk is limited in some cases due to its allergen character.

Quillaia is also known for its emulsifying properties. However, this plant contains saponins which are toxic for humans at certain concentrations.

Thus there is an ongoing need to provide emulsifier systems based on food source ingredients that can replace synthetic emulsifiers in food applications.

It is desirable to overcome or ameliorate at least one of the disadvantages of the prior art, or to provide a useful alternative. In particular, it is desirable to provide an emulsifier system which can replace synthetic emulsifiers in food applications.

It would be advantageous to provide an emulsifier system which can replace synthetic emulsifiers in particular in the manufacture of confectionery products, while not compromising on the product quality.

It would be advantageous to provide an emulsifier system which can replace synthetic emulsifiers in particular in the manufacture of frozen confectionery products, while not compromising on the product quality.

### SUMMARY OF THE INVENTION

There is now provided en emulsifier system for use in a food product comprising coffee particles with an average particle size comprised between 10 and 30 microns.

The particles are preferably selected from roasted coffee particles, green coffee particles and mixtures thereof.

Advantageously the coffee-particle stabilized emulsions of the invention do not require the addition of any other emulsifier.

In another aspect there is provided the use of said emulsifier system for stabilizing the interface between a fat phase and an aqueous phase of a food product.

The use of coffee particles with an average particle size comprised between 10 and 30 microns as emulsifier system in the manufacture of a food product, in particular a confectionery product, and a food product, in particular a confectionery product, including such emulsifier system also form part of the invention. Advantageously the confectionery product is free from synthetic emulsifiers or structuring agents.

In another aspect there is provided a process for preparing a confectionery product, comprising the steps of:
(a) Providing an aqueous phase
(b) Providing a fat phase
(c) Dispersing an emulsifier system comprising coffee particles with an average particle size comprised between 10 and 30 microns in one or both of the aqueous phase or the fat phase
(d) Homogenizing the two phases to form an emulsion.

Advantageously the emulsifier system of the present invention can replace synthetic emulsifiers in the manufacture of food products. Advantageously the present invention makes possible the preparation of food products based on emulsions, and particularly confectionery products, which do not contain synthetic emulsifiers.

These and other aspects, features and advantages of the invention will become more apparent to those skilled in the art from the detailed description of embodiments of the invention, in connection with the attached drawings.

### BRIEF DESCRIPTION OF THE DRAWINGS

Figure 1 shows the particle distribution size of the coffee particle emulsifier systems described in Table 1. MRC represents ground roasted coffee; EMRC represents exhausted ground roasted coffee; DMRC represents defatted ground roasted coffee; and DEMRC represents defatted exhausted ground roasted coffee.
Figure 2 shows microscope images of 10 wt% HOSFO, 1 wt% micronized roasted coffee samples dispersed in water: 2(a) sample 1; 2(b) sample 2; 2(c) sample 3; (d) sample 4.
Figure 3 shows microscope images of 55%w/w oil and 5%w/w coffee particles samples dispersed in water: 3(a) sample A; 3(b) sample B; 3(c) sample C.
Figure 4 shows microscope images of 55%w/w oil and 5%w/w coffee particles samples dispersed in water, after storage for 7 days at room temperature: 4(a) sample A; 4(b) sample B; 4(c) sample C.

### DETAILED DESCRIPTION OF THE INVENTION

As used in the specification, the words "comprise", "comprising" and the like are to be construed in an inclusive sense as opposed to an exclusive or exhaustive sense; that is to say, in the sense of "including, but not limited to".

As used in the specification, the word "about" should be understood to apply to each bound in a range of numerals. Moreover, all numerical ranges should be understood to include each whole integer within the range.

As used in the specification, the singular forms "a", "an", and "the" include plural referents unless the context clearly dictates otherwise.

As used in the specification, the term "substantially free" means that no more than about 10 weight percent, preferably no more than about 5 weight percent, and more preferably no more than about 1 weight percent of the excluded material is present. In a preferred embodiment, "substantially free" means that no more than about 0.1 weight percent of the excluded material remains. "Entirely free" typically means that at most only trace amount of the excluded material is present, and preferably, no detectable amount is present. Conversely, "substantially all" typically means that at least about 90 weight percent, preferably at least about 95 weight percent, and more preferably at least about 99 weight percent of the material is present.

Unless noted otherwise, all percentages in the specification refer to weight percent, where applicable.

Unless defined otherwise, all technical and scientific terms have and should be given the same meaning as commonly understood by one of ordinary skill in the art to which this invention belongs.

The term dry weight refers to the measurement of the mass of matter when completely dried and all fluids are completely removed from the matter. The dry weight % of a substance refers to the relative amount of said substance in the total dry weight matter. In the description of the present invention dry weight % is termed "w/w %".

The term "beverage" product is used herein to refer to a liquid prepared for human consumption.

The term "frozen confectionery products" according to the invention includes ice cream, sherbet, frozen yogurt, mellorine, ice milk, frozen shake and other frozen dessert.

The term "confectionery product" as used herein to includes chocolate, chocolate analogues containing milk fat, milk fat replacers, cocoa butter, cocoa butter replacers, cocoa butter substitutes, cocoa butter equivalents, non metabolizable fats or any mixture thereof; compound, confectionery fillings, pralines, caramel, wafers, hard boil sugar candy, soft boil sugar candy, jellified confections and fruit-based confections. The term "confectionery product" does not include frozen confectionery products.

Other definitions and/or explanations are present in the detailed description below.

The present invention concerns the use of coffee particles as the emulsifier system for the stabilization of a water-oil interface in a food product. By "emulsifier system" is to be understood at least one ingredient with tensioactive properties.

The inventors of the present invention have surprisingly found that particles of coffee, a naturally-occurring food-source ingredient, are able to stabilize the interface between a water and an oil phase of a product and produce emulsions with good stability without the need for the addition of emulsifiers, or structuring agents or other stabilisers.

Unlike the stabilising particles described in the literature, the coffee particles according to the invention are obtained from food source of naturally occurring materials and require no activation to stabilise emulsions. As coffee solids are not classed as food additives, the invention provides the important advantage of allowing the preparation of products that are free of additives, e.g. free of the so-called "E-numbers" associated with chemical emulsifiers.

Surprisingly coffee particles having an average particle size from 10 to 30µm, have been found to effectively stabilise emulsions without the need for any synthetic or artificial emulsifier. Surprisingly the coffee particles have been found to remarkably stabilise emulsions against coalescence and more surprisingly can stabilise emulsions also against creaming and sedimentation.

The coffee particles have a particle size (otherwise referred to as a mean particle diameter) with an average particle size of from 10 to 30 microns. By particle size, or mean particle diameter, is in the present context meant the diameter as measured by laser diffraction methods, a static light scattering technique, unless otherwise defined. When particle size distributions are considered it is thus the volume weighted distribution as determined by laser diffraction, unless otherwise defined, and when average or mean sizes are discussed the volume weighted mean size, also called d_{4,3} or volume moment mean, is meant unless otherwise defined.

It is surprising that the coffee particles have been found to exhibit the observed sufficiently good emulsion stabilisation effects without requiring the addition of any other emulsifier, stabilising agent, or structuring agent, and without requiring any activation of the particles.

Conventional emulsifiers include for instance sugar esters, polyglycerol fatty acid esters, polyglycerol polyricinoleate (PGPR), polysorbates (polyoxyethylene sorbitan esters), monoglycerides/diglycerides and their derivatives, sodium stearoyl lactylate (SSL), phospholipids, glycerol monooeleate, amongst others. Advantageously, the present invention uses coffee particles to stabilize emulsions without the need of addition of such emulsifiers or stabilizing agents.

In the present specification, the term "structuring agent" is understood as a component having the capacity to bind and /or structure water. Structuring agents include polysaccharides and/or proteins, such as carrageenans, pectins, gellan, gelatines, guar, acacia gum, sodium alginate, xanthan gum or globular proteins such as those contained in a whey protein isolate, an egg white protein isolate, a soy protein isolate or other globular protein isolates from an animal or vegetal source. Advantageously the present invention enables the preparation of food products, in particular confectionery products, frozen confectionery products and beverage products, based on emulsions without the need for such structuring agents.

Advantageously the present invention enables the preparation of food products, in particular confectionery products, based on emulsions that are free of artificial or synthetic emulsifiers. Advantageously the present invention enables the preparation of food products that are free of monoglycerides, diglycerides and their derivatives. Advantageously the present invention enables the preparation of food products, in particular confectionery products, based on emulsions that are free of glycerol monooleate, polyglycerol esters and polyglycerol esters of polyrincinoleic acid.

Surprisingly the inventors of the present invention have found that the coffee particles are able to produce emulsion-based food products with exceptional stability, without the need for emulsifiers, structuring agents or other stabilising agents.

Unlike the stabilising particles described in the literature, coffee particles are obtained from a food source of naturally occurring materials and require no activation to stabilise emulsions. As coffee solids are not classed as food additives, the invention provides the important advantage of allowing the preparation of products that are free of additives, e.g. free of the so-called "E-numbers".

The source of the coffee solids is not important. The coffee solids are preferably selected from roasted coffee particles, green coffee particles and mixtures thereof.

Typically roasted coffee particles used in the emulsifier system may have a roasting degree between about CTn80 and CTn100.

The coffee solids may be subjected to an extraction prior being added to a composition. In the present context the term "extraction" is to be understood as a separation process comprising the separation of a substance from a matrix using a liquid phase where the substance to be separated is soluble (e.g. separation of water soluble compounds from a plant material).

In a preferred embodiment of the present invention the coffee solids are not subjected to a high degree of extraction or extraction of water soluble compounds prior to being added to the composition. Examples of such water soluble compounds may be polyphenol compounds, nitrogenous compounds and polysaccharide molecules. The term "high degree of extraction" is to be understood as a substantially exhausted separation of a substance from a matrix using a liquid phase where the substance to be separated is soluble.

In one embodiment the extraction may be an aqueous extraction. In some embodiments the coffee particles are exhausted green or roasted coffee particles, which have been subjected to an aqueous extraction. Conventional extraction processes may be used. According to a particular embodiment the coffee particles may be obtained by a process involving:
- Grinding coffee beans in liquid nitrogen;
- Performing two aqueous extractions using an ultrasound bath, then a waterbath;
- Filtrating the liquid phase from the solid part;
- Drying the solid part to provide coffee particles.

In certain embodiments the coffee solids may be defatted. In the present context the term "defatted" is to be understood as a stabilizing agent comprising less that 5 w/w% lipids, such as less than 1 w/w% lipids, e.g. in the range of 0.01-5, such as in the range of 0.1-3, e.g. in the range of 0.5-2, e.g. in the range of 0.75-1.). In certain embodiments the emulsifier system may comprise substantially no lipids(s) originating from the coffee material. In the present context the term "lipid(s)" is to be understood as a compound comprising at least 3 fatty acids.

In one preferred embodiment the coffee particles are roasted coffee particles that have not been subjected to any physico-chemical modification, such as but not limited to extraction, fractionation or defatting, prior to or subsequent to being ground.

Thus, in an embodiment of the present invention the coffee particles may comprise substantially the same compounds as the coffee bean material from which they are derived. Such compounds may for example be nitrogenous compounds, polyphenols and polysaccharide molecules.

In one embodiment the coffee particles are green coffee particles and comprise from 10 to 15wt% dry matter proteins and from 10 to 20 wt% dry matter polysaccharides.

Coffee particles have been found to stabilise emulsion remarkably against coalescence. Even more surprisingly coffee particles have been found to produce emulsions with significant reduction of sedimentation of coffee particles. Coffee particles are denser than water and therefore would be expected to settle down at the bottom in the absence of conventional chemical emulsifiers, stabilizing agents and/or structuring agents, however surprisingly the emulsions prepared according to the invention have good stability properties against the sedimentation of the coffee particles. At the same time it has also surprisingly been observed that the coffee particles remarkably stabilised the emulsions against creaming of the oil droplet phase.

Advantageously coffee particles can be used to replace conventional emulsifiers and/or structuring agents to effectively stabilise emulsions in food products.

The emulsifier system of the present invention may be used for stabilizing the interface between a lipid phase and an aqueous phase of a product. In an embodiment of the present invention the food product may be selected from the group consisting of a chilled dairy product, an ambient diary product, a frozen confectionery product, a confectionery product, a pet-care product and a beverage product The beverage product may be a coffee based product (such as but not limited to espresso, cappuccino, iced coffee or ice blended coffee, instant coffee, instant espresso coffee, and coffee mixes, coffee mixtures, mixes of roast and ground coffee and instant coffee, and ready-to-drink coffee beverages).

According to one aspect of the invention there is provided a confectionery product consisting of a stable emulsion comprising coffee particles, having an average particle size of from 10 to 30 microns as the emulsifying agent, in the absence of any synthetic or artificial emulsifiers or structuring agents.

The confectionery product consisting of an emulsion may be a chocolate, a chocolate-like (e.g. comprising cocoa butter replacers, or cocoa-butter equivalents), a chocolate spread, a chocolate sauce, a coating chocolate, a coating chocolate for ice-creams, a praline, a chocolate filling, a fudge, a chocolate cream, a refrigerated chocolate cream, an extruded chocolate product, or the like. The confectionery product may be in any conventional form, such as in the form of an aerated product, a bar, a spread, a sauce or a filling, among others. It may also be in the form of inclusions, chocolate layers, chocolate nuggets, chocolate pieces, chocolate drops, or shaped chocolates and the like. The confectionery product may further contain inclusions e.g. cereals, like expanded or toasted rice or dried fruit pieces and the like.

The amount of coffee particles included as the emulsifier will depend on the desired properties of the emulsion product amongst other. Typically the coffee particles are present in amount of from about 0.1 to about 20% wt/wt of the confectionery product, preferably from about 0.1 to about 10% wt/wt, e.g from about 1 to about 10% wt/wt. In a preferred embodiment the emulsifier is provided by coffee particles, present in an amount of from about 2% to about 10% of the confectionery product.

In the present specification, the term "fat phase" is understood as including any solid and/or liquid ingredient miscible with oil or fat or that has the capacity to dissolve in oil or fat, and "aqueous phase" as including any solid and/or liquid ingredient miscible with water or that has the capacity to dissolve in water.

The confectionery product may comprise sugars. These sugars include sucrose, fructose, sugar replacers such as polyols (e.g., maltitol, lactitol, isomalt, erythritol, sorbitol, mannitol, xylitol) or bulking agents like polydextrose or other sweeteners like tagatose or high intensity sweeteners like saccharin, aspartame, acesulfame-K, cyclamate, neohesperidin, thaumathin, sucralose, alitame, neotame or any combination thereof.

The confectionery product may comprise ingredients such as flavouring agents, colorants, or milk ingredients. Typically flavouring agents are used to add flavours such as vanilla, raspberry, orange, mint, citrus, strawberry, apricot, lavender flavours, etc, and any other fruit, nutty or flower flavouring agent, among others. Milk ingredients can be liquid milk or milk powder, either full fat, partially defatted or defatted, and delactosylated or not.

In the confectionery product the fat phase is typically cocoa butter, a cocoa butter substitute, cocoa butter replacer, cocoa butter improver and/or cocoa butter equivalent, among others.

Cocoa butter substitute is a lauric fat obtained from the kernel of the fruit of palm trees obtained by fractionation and/or hydrogenation of palm kernel oil. It comprises about 55% lauric acid, 20% myristic acid and 7% oleic acid, cocoa butter substitutes cannot be mixed with cocoa butter. Cocoa butter equivalents are vegetable fats with similar chemical and physical characteristics to cocoa butter, which are obtained by blending different fractions of other fats or by intersterification, and can be used interchangeably with cocoa butter in any recipe. Cocoa butter replacers are formed by non lauric vegetable fats which may be mixed with cocoa butter but only in limited proportions: they have similar physical, but not chemical characteristics to cocoa butter. Cocoa butter replacers can be used in recipes partially based on cocoa mass or cocoa butter. Cocoa butter improvers are harder cocoa butter equivalents which are not only equivalent in their compatibility but also improve the hardness of some of the softer qualities of cocoa butter.

Advantageously the present invention allows the preparation of confectionery products based on emulsions having very good stability properties, in the absence of any synthetic emulsifiers, structuring agents or other stabilizing agents. Advantageously the present invention allows the preparation of emulsion-based confectionery products having very good emulsion stability properties, which stabilized by coffee particles as the emulsifying agent, without the addition of any other emulsifier and without the need for carrying out any chemical activation step/treatment on the coffee particles.

The emulsions stabilised with coffee particles according to the invention can be prepared following conventional methods for the preparation of emulsions.

According to an exemplary method, in some embodiments the process for preparing a confectionery product in the form of an emulsion, comprises the steps of:
(a) Providing an aqueous phase
(b) Providing a fat phase
(c) Dispersing an emulsifier system comprising coffee particles with an average particle size comprised between 10 and 30 microns in one or both of the aqueous phase or the fat phase
(d) Homogenizing the two phases to form an emulsion.

In certain embodiments, for the preparation of an oil-in-water emulsion, the coffee particles are dispersed in the aqueous phase, and the oil/fat phase is added to the aqueous phase, before agitation to form an emulsion. In other embodiments, the coffee particles are dispersed in the oil/fat phase, and the aqueous phase is added to the oil/fat phase, before agitation to form an emulsion. Homogenization is conveniently used to provide the agitation for formation of the emulsion, however other conventional technologies are contemplated.

In another embodiment the emulsifier system of the invention may be used in the manufacture of a frozen confectionery. For example, it may be used in the same way as traditional emulsifier systems in the manufacture of ice cream, sherbet, frozen yogurt, milk ice, mellorine, frozen shake or other frozen dessert.

The frozen confectionery may be prepared by conventional methods. An exemplary method for the manufacture of a frozen confectionery may comprise the steps of:
(a) Blending a frozen confectionery ingredient mix comprising from 0.5 to 20wt% fat, from 5 to 15wt% milk solids-non-fat, from 5 to 35 wt% of a sweetening agent, up to 3 wt% of a stabiliser and from 0.1 to 10 wt% of an emulsifier system comprising coffee particle with an average particle size comprised between 10 and 30 microns,
(b) Pasteurising and homogenising the mix,
(c) Freezing while optionally aerating the mix,
(d) Optionally hardening the frozen mix.

Advantageously the present invention makes possible the preparation of food products based on emulsions, and particularly confectionery products, which do not contain any additives, or non-natural ingredients. Advantageously the coffee particle stabilised emulsions of the present invention do not require the addition of any emulsifiers, structuring agents or other stabilizing agents. Advantageously the coffee particle stabilised emulsions of the present invention do not require any activation step/treatment on the cocoa particles.

The term "about," as used herein, should generally be understood to refer to both numbers in a range of numerals. Moreover, all numerical ranges herein should be understood to include each whole integer within the range.

Advantageously the emulsifier system of the present invention can replace synthetic emulsifiers in the manufacture of food products. Advantageously the present invention makes possible the preparation of food products based on emulsions, and particularly confectionery products and frozen confectionery, which do not contain synthetic emulsifiers.

The invention is further described with reference to the following non-limiting examples.

### EXAMPLE 1

### Materials and Methods

Emulsions were generated as described below.

### Coffee Ingredients

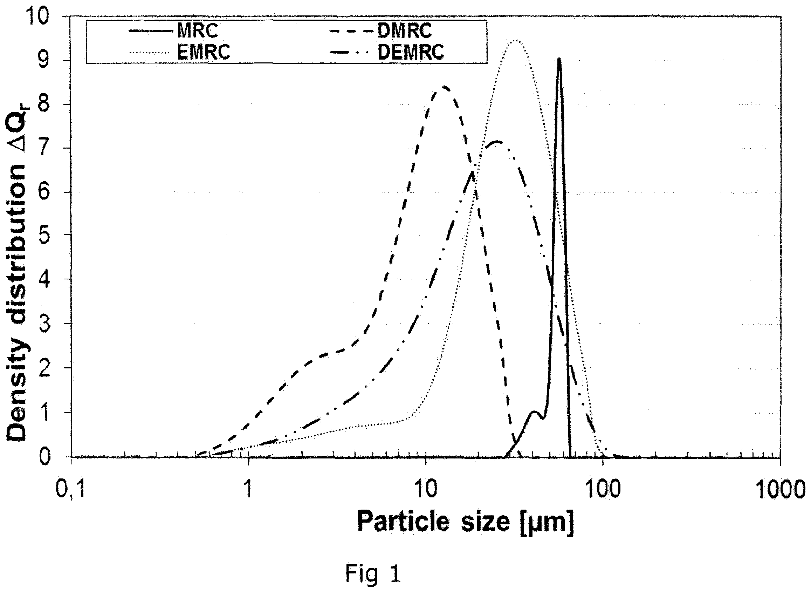

Four ingredients from coffee were tested as emulsifiers and prepared as described in Table 1 below. The particle distribution size of the coffee particle emulsifier systems described in Table 1 are shown in figure 1.

### Additional Materials

Emulsions were generated using the following additional materials:
- MilliQ water,
- Hydrochloric acid (Merck) *(for making aqueous solutions at pH 2, 4, 6),*
- Sodium hydroxide (Merck) *(for making aqueous solutions at pH 8),*
- Disodium hydrogen phosphate/potassium dihydrogen phosphate pH 7 buffer solution (Merck).

Experiments were performed to test the ability of coffee ingredients to stabilize interfaces.

**Table 1**

| **Sample** | | **Preparation** | **Particle size** (d_{4,3}) |
|---|---|---|---|
| 1 | Roasted coffee (MRC) | Roasted coffee was ground in a cryomill. | 20.0 µm |
| 2 | Exhausted MRC (EMRC) | Roasted coffee, extracted to 54% yield by aqueous extraction at 110°C and 180°C, was freeze dried and the resulting solid ground in a cryomill. | 9.9 µm |
| 3 | Defatted MRC (DMRC) | 50g of MRC was added to a soxhlet extractor and defatted with petroleum ether for 6hr. The resulting defatted coffee was dried under a stream of nitrogen overnight to yield a defatted ground coffee. | 29.3 µm |
| 4 | Defatted exhausted MRC (DEMRC) | Sample 3 (50g) was added to a soxhlet extractor and defatted with petroleum ether for 6hr. The resulting defatted coffee was dried under a stream of nitrogen overnight to yield a defatted exhausted ground coffee. | 22.7 µm |

Table 1: Overview of coffee ingredients tested for stabilizing emulsions in examples 1 and 2.

The grinding of the coffee samples 1-4 was carried out with a ZPS cryogrinder, using:
Flow rate of coffee: 100g/h
Feeding speed: 10rpm
Classifier speed: 8000rpm
ZPS speed: 22000rpm
Inlet temperature: -80°C
Airflow: 65m3/h.

Extraction yield, as used herein, was determined as the ratio w/w of solids recovered in the extract with the solids present in the initial coffee beans.

Characterization of the Roasted Coffee (MRC) Sample 1 and Exhausted Roasted Coffees (EMRC) Sample 2 is given in Table 2:

**Table 2**

| % Dry Matter w/w | | | | | | | |
|---|---|---|---|---|---|---|---|
| | Proteinous Melanoidins | Arabinose | Galactose | Mannose | Glucose | Tot. Carbs. | Oil |
| MRC | 14.9 | 2.2 | 10.0 | 16.8 | 6.8 | 36.5 | 14.5 |
| EMRC | 14.3 | 0.1 | 0.3 | 8.3 | 16.8 | 25.9 | 26.6 |

### 1.1 Emulsion Stability Experiments

Emulsions were prepared using 10 wt% HOSFO and 1 wt% of the MRC samples 1 - 4 in water. Emulsions were formed by pre-mixing the ingredients with a magnetic stirrer (approximately 300 s) at ambient temperature and then applying a high shear flow using a Polytron PT 300 (Kinematica AG) at 10,000 rpm for 180 s, also at ambient temperature (cooling to counteract local heating due to friction was not prevented at this stage). The resulting dispersions were visually inspected by bright field microscopy and recorded using digital photography.

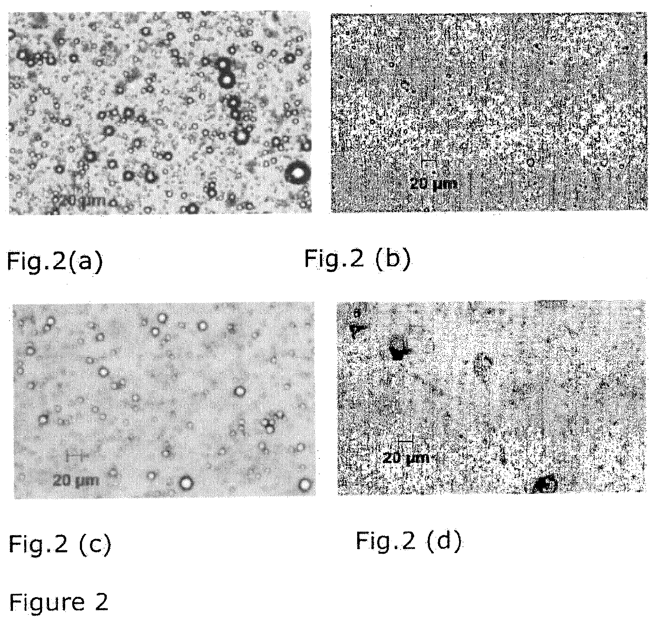

These exhibited classic oil-in-water emulsion behaviour, forming oil droplets dispersed in water which creamed due to buoyancy forces. Microscope images were taken of the emulsions and typical microstructural arrangements are shown in figure 7. The non-exhausted samples 1 and 3, figure 2(a) and (c), contained the highest amount of emulsified oil, while the spent samples 2 and 4, figure 2(b) and (d), contained some oil droplets and also non-spherical particles, probably insoluble coffee particles. Visual inspection of the oil droplets indicates that the typical droplet diameter *d =* 2 - 10 µm. The slightly less good droplet stabilization for exhausted MRC extracts is likely due to the depletion of surface active materials such as melanoidines which occurred during the extraction of the coffee.

### 1.2 Effect of Ionic Environment on Emulsion Stability

The effect of ionic environment for the ground roasted coffee samples was investigated by preparing 10 wt% HOSFO/ 1 wt% MRC/ 89 wt% aqueous buffer solution at pH 2, pH 4 and pH7, prepared as in Example 1.1. The resulting dispersions were visually inspected by bright field microscopy and recorded using digital photography.

Macroscopic images on all of the samples shows that independently of the upper cream layer, the solubility of the MRC sample 1-4 in water increased with an increasing value of pH. An increased hydrophilicity is also observed at the microscopic level. A clearer preference for forming oil-in-water droplets is observed as the pH progresses from pH 2 to pH 7. This increased hydrophilicity corresponds to the improved foam stabilization behavior observed for the MRC samples 1-4 at higher values of pH.

### Example 2: Emulsion Storage Stability

### Coffee Ingredients

Three ingredients from coffee were tested as emulsifiers as described in Table 3 below. Characterisation of the Coffee samples A-C is given in Table 4 below.

**Table 3.**

| **Sample** | | **Preparation** | **Particle size** (d_{4,3}) |
|---|---|---|---|
| A | Exhausted Robusta Green Coffee (Reference Example) | Green Coffee, extracted by aqueous extraction as described below | 88.9 µm |
| B | Exhausted Roasted Coffee (Reference Example) | Roasted coffee, extracted by aqueous extraction as described below | 119.4 µm |
| C | Roasted coffee (MRC) (Reference Example) | Roasted coffee was ground in a ZPS cryogrinder, according to Example 1 | 21.0 µm |

The preparation of the exhausted coffee sample A and B was carried out according to the following aqueous extraction method:
1. Coffee raw material was ground in liquid nitrogen.
2. Hot water 90°C (± 5 °C) was added to the ground coffee raw material placed in an ultrasound bath for 30 minutes (± 2 minutes). (for 1 kg coffee raw material 2.5 L hot water (± 0.1 L) was added).
3. The mixture was filtered under vacuum (Buchner-type filtration), followed by filtration in a spinner at 2200 rpm for 20 minutes (filter pore size: 20-50 microns).
4. The solid phase was retained and placed in hot water 90°C (± 5 °C) with stirring (waterbath shaker) for 60 minutes (± 10 minutes). (2.5 L hot water (± 0.1 L) was added).
5. The mixture was subjected to a second filtration step under vacuum (Buchner-type filtration), followed by filtration in a spinner at 2200 rpm for 20 minutes (filter pore size: 20-50 microns).
6. The particles were dried at room temperature under fume hood for 24 hours.

**Table 4**

| | % Dry Matter w/w | | | | | | | |
|---|---|---|---|---|---|---|---|---|
| | Prot. Melanoidins | Protein | Arabinose | Galactose | Mannose | Glucose | Tot. Carbs. | Lipids |
| A | | 12.2 | 0.9 | 6.6 | 7.3 | 2.7 | 17.5 | 8.5 |
| B | 14.2 | | 0.6 | 5.3 | 6.7 | 2.4 | 15.0 | 5.9 |
| C | 14.9 | | 2.2 | 10.0 | 16.8 | 6.8 | 36.5 | --- |

Emulsions were prepared by first dispersing the coffee particle samples A-C in distilled water followed by the addition of refined corn oil (Mazola^{™} oil). The mixture was subjected to emulsification using a Polytron PT2100 (Kinematica AG, Switzerland) high-shear mixer running at speed set 22 for 10 minutes. The emulsions were prepared to contain 55%w/w oil and 5%w/w coffee particles; water was the balance ingredient.

After preparation the samples were checked by visual observation, particle size and microscopy. Particle size distributions were measured at a laser diffraction particle size analyser (Malvern Mastersizer 2000, Malvern Ltd, UK) utilising the Fraunhofer optical model. Average sizes were assessed using d_{4,3}, the volume mean. The samples were dispersed in water. (Average particle size for the samples A-C is given in Table 3 above). Micrographs were captured using an Olympus BH-2 microscope (Olympus, Japan) fitted with a QImaging digital camera and with Lynksys 32 software (Linkam Scientific Instruments, UK). The samples were diluted in distilled water prior to microscopic examinations. 40x magnification lens was used to examine the samples.

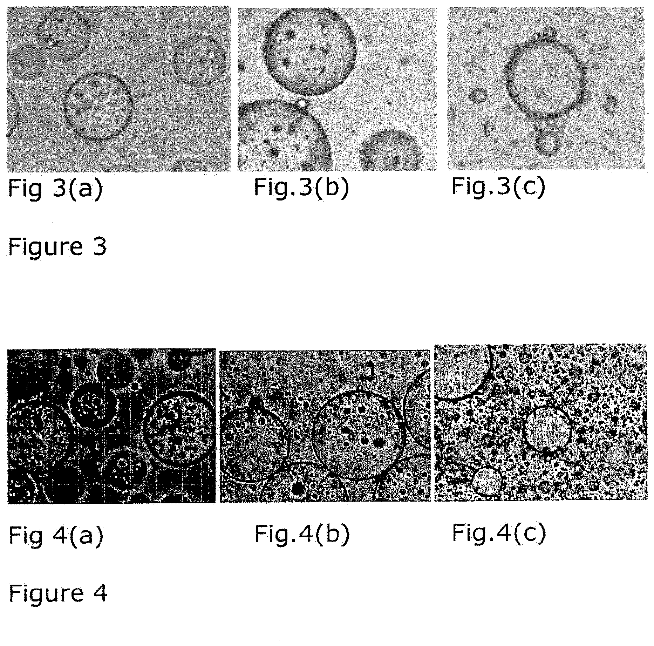

Homogenous emulsions were obtained with all coffee particle samples A-C. The droplet size of the emulsions was measured and the results are given in Table 5. MRC (Sample C) yielded an emulsion with much smaller particle size. The micrographs, shown in Figure 3, of emulsion samples checked under the microscope show that the oil droplets appears to have small droplets and particles adsorbed at interface. Fig.3(a) = sample A; Fig.3(b) = sample B; Fig.3(c) = sample C

**Table 5: Droplet size of coffee powder-stabilised emulsions measured on the day they were prepared and 7 days after storage at ambient temperature.**

| **Sample** | | **Particle size** (d_{4,3}) (µm) | |
|---|---|---|---|
| | | **Initial** | **After 7 days** |
| A | Exhausted Green Coffee | 65.5 | 78.0 |
| B | Exhausted Roasted Coffee | 73.4 | 74.6 |
| C | Roasted coffee (MRC) | 15.6 | 24.9 |

The samples were kept undisturbed for one week at room temperature for stability test. Visual inspection observed that the emulsion samples remained stable after storage; no oil separation was observed and the degree of creaming varied with the source of coffee powder.

After storage the appearance of the emulsion droplets, shown in Figure 4, also remained unchanged; particles and small droplets adsorbed at interface are observed. (Fig.4 (a) = sample A; Fig.4(b) = sample B; Fig.4(c) = sample C). The droplet size of the emulsions following storage is given in Table 5. The droplet size distributions of emulsions before and after storage were assessed and the results showed that there was only very little evolution of the droplet size following storage. The samples containing exhausted roasted coffee powder appeared the most stable as only a very small change in the droplet size was observed. The particle size results following storage remained substantially unchanged, which indicates that the emulsions are very stable against coalescence.

Although preferred embodiments have been disclosed in the description with reference to specific examples, it will be recognised that the invention is not limited to the preferred embodiments. Various modifications may become apparent to those of ordinary skill in the art and may be acquired from practice of the invention. It will be understood that the materials used and the chemical details may be slightly different or modified from the descriptions without departing from the methods and compositions disclosed and taught by the present invention.

## Claims

1. Use of an emulsifier system comprising coffee particles, wherein the coffee particles have an average particle size in the range of from 10 µm to 30 µm, for stabilising an interface between a fat phase and an aqueous phase of a food product, wherein the particle size is measured by laser diffraction methods, and wherein the average particle size is the volume weighted mean (d_{4,3}).

2. Use according to claim 1, wherein the coffee particles are selected from green coffee, roasted coffee and any mixture thereof.

3. Use according to claim 1, wherein the coffee particles comprise from 10 to 15 wt% dry matter proteins and from 10 to 20 wt% dry matter polysaccharides

4. Use according to any one of claims 1-3, wherein the coffee particles are obtainable by a process which comprises:
a) grinding coffee beans in liquid nitrogen
b) performing two aqueous extractions preferably using an ultrasound bath, then a waterbath;
c) filtrating the liquid phase from the solid part;
d) drying the solid part to provide coffee particles.

5. Use of an emulsifier system according to any one of claims 1-4 wherein the food product is a dairy product, a confectionery product, an frozen confectionery product, a pet-care product or a beverage product.

6. A food product **characterised in that** it comprises an emulsion stabilised by from 0.1 to 10 wt% of an emulsifier system comprising coffee particles, wherein the coffee particles have an average particle size in the range of from 10 µm to 30 µm, for stabilising an interface between a fat phase and an aqueous phase of a food product, wherein the particle size is measured by laser diffraction methods, and wherein the average particle size is the volume weighted mean (d_{4,3}).

7. A food product according to claim 6, wherein the coffee particles are selected from green coffee, roasted coffee and any mixture thereof.

8. A food product according to any one of claims 6 or 7, wherein the coffee particles comprise from 10 to 15 wt% dry matter proteins and from 10 to 20 wt% dry matter polysaccharides

9. A food product according to any one of claims 6-8, wherein the coffee particles are obtainable by a process which comprises:
a) grinding coffee beans in liquid nitrogen
b) performing two aqueous extractions preferably using an ultrasound bath, then a waterbath;
c) filtrating the liquid phase from the solid part;
d) drying the solid part to provide coffee particles.

10. A food product according to any one of claims 6-9, wherein the food product is selected from a dairy product, a confectionery product, a frozen confectionery product, a pet-care product or a beverage product.

11. A food product according to claim 10 wherein the food product is a confectionery product.

12. A method for stabilizing the interface between a fat phase and an aqueous phase of a food product, the method comprising the steps of:
(i) providing at least one fat phase; at least one aqueous phase; and an emulsifier system comprising coffee particles have an average particle size in the range of from 10 µm to 30 µm, wherein the particle size is measured by laser diffraction methods, and wherein the average particle size is the volume weighted mean (d_{4,3});
(ii) dispersing the emulsifier system in at least one fat phase, at least one aqueous phase, or in both at least one fat phase and at least one aqueous phase;
(iii) homogenising the at least one aqueous phase and the at least one fat phase to form an emulsion.

## Patentansprüche

1. Verwendung eines Emulgatorsystems, umfassend Kaffeepartikel, wobei die Kaffeepartikel eine durchschnittliche Partikelgröße in dem Bereich von 10 µm bis 30 µm zum Stabilisieren einer Grenzfläche zwischen einer Fettphase und einer wässrigen Phase eines Lebensmittelprodukts aufweisen, wobei die Partikelgröße durch Laserbeugungsverfahren gemessen wird, und wobei die durchschnittliche Partikelgröße das volumengewichtete Mittel (d_{4,3}) ist.

2. Verwendung nach Anspruch 1, wobei die Kaffeepartikel aus Rohkaffee, geröstetem Kaffee und einer beliebigen Mischung davon ausgewählt werden.

3. Verwendung nach Anspruch 1, wobei die Kaffeepartikel von zu 10 bis 15 Gew.-% Trockenmasse Proteine und von zu 10 bis 20 Gew.-% Trockenmasse Polysaccharide umfassen

4. Verwendung nach einem der Ansprüche 1 bis 3, wobei die Kaffeepartikel durch einen Vorgang erhalten werden können, der Folgendes umfasst:
a) Mahlen von Kaffeebohnen in flüssigem Stickstoff
b) Durchführen von zwei wässrigen Extraktionen, vorzugsweise unter Verwendung eines Ultraschallbads, und dann eines Wasserbads;
c) Filtrieren der flüssigen Phase aus dem Feststoffteil;
d) Trocknen des Feststoffteils, um Kaffeepartikel bereitzustellen.

5. Verwendung eines Emulgatorsystems nach einem der Ansprüche 1 bis 4, wobei das Lebensmittelprodukt ein Milchprodukt, ein Süßwarenprodukt, ein gefrorenes Süßwarenprodukt, ein Haustierpflegeprodukt oder ein Getränkeprodukt ist.

6. Lebensmittelprodukt **dadurch gekennzeichnet, dass** es eine Emulsion umfasst, die durch von zu 0,1 bis 10 Gew.-% eines Emulgatorsystems stabilisiert ist, umfassend Kaffeepartikel, wobei die Kaffeepartikel eine durchschnittliche Partikelgröße in dem Bereich von 10 µm bis 30 µm aufweisen, zum Stabilisieren einer Grenzfläche zwischen einer Fettphase und einer wässrigen Phase eines Lebensmittelprodukts, wobei die Partikelgröße durch Laserbeugungsverfahren gemessen wird, und wobei die durchschnittliche Partikelgröße das volumengewichtete Mittel (d_{4,3}) ist.

7. Lebensmittelprodukt nach Anspruch 6, wobei die Kaffeepartikel aus Rohkaffee, geröstetem Kaffee und einer beliebigen Mischung davon ausgewählt werden.

8. Lebensmittelprodukt nach einem der Ansprüche 6 oder 7, wobei die Kaffeepartikel von zu 10 bis 15 Gew.-% Trockenmasse Proteine und von zu 10 bis 20 Gew.-% Trockenmasse Polysaccharide umfassen

9. Lebensmittelprodukt nach einem der Ansprüche 6 bis 8, wobei die Kaffeepartikel durch einen Vorgang erhalten werden können, der Folgendes umfasst:
a) Mahlen von Kaffeebohnen in flüssigem Stickstoff
b) Durchführen von zwei wässrigen Extraktionen, vorzugsweise unter Verwendung eines Ultraschallbads, und dann eines Wasserbads;
c) Filtrieren der flüssigen Phase aus dem Feststoffteil;
d) Trocknen des Feststoffteils, um Kaffeepartikel bereitzustellen.

10. Lebensmittelprodukt nach einem der Ansprüche 6 bis 9, wobei das Lebensmittelprodukt aus einem Milchprodukt, einem Süßwarenprodukt, einem gefrorenen Süßwarenprodukt, einem Haustierpflegeprodukt oder einem Getränkeprodukt ausgewählt ist.

11. Lebensmittelprodukt nach Anspruch 10, wobei das Lebensmittelprodukt ein Süßwarenprodukt ist.

12. Verfahren zum Stabilisieren der Grenzfläche zwischen einer Fettphase und einer wässrigen Phase eines Lebensmittelprodukts, das Verfahren umfassend die Schritte:
(i) Bereitstellen mindestens einer Fettphase; mindestens einer wässrigen Phase; und ein Emulgatorsystem, umfassend Kaffeepartikel, die eine durchschnittliche Partikelgröße in dem Bereich von 10 µm bis 30 µm aufweisen, wobei die Partikelgröße durch Laserbeugungsverfahren gemessen wird, und wobei die durchschnittliche Partikelgröße das volumengewichtete Mittel (d_{4,3}) ist;
(ii) Dispergieren des Emulgatorsystems in mindestens eine Fettphase, mindestens eine wässrige Phase, oder sowohl mindestens eine Fettphase als auch mindestens eine wässrige Phase;
(iii) Homogenisieren der mindestens einen wässrigen Phase und der mindestens einen Fettphase, um eine Emulsion auszubilden.

## Revendications

1. Utilisation d'un système émulsifiant comprenant des particules de café, dans laquelle les particules de café ont une taille moyenne de particules dans la plage allant de 10 µm à 30 µm, permettant de stabiliser une interface entre une phase grasse et une phase aqueuse d'un produit alimentaire, dans laquelle la taille de particules est mesurée par des méthodes de diffraction laser, et dans lequel la taille moyenne de particules est la moyenne pondérée en volume (d_{4,3}).

2. Utilisation selon la revendication 1, dans laquelle les particules de café sont choisies parmi du café vert, du café torréfié et un mélange quelconque de ceux-ci.

3. Utilisation selon la revendication 1, dans laquelle les particules de café comprennent de 10 à 15 % en poids de matière sèche de protéines et de 10 à 20 % en poids de matière sèche de polysaccharides

4. Utilisation selon l'une quelconque des revendications 1 à 3, dans laquelle les particules de café peuvent être obtenues par un processus qui comprend :
a) le fait de moudre des grains de café dans de l'azote liquide
b) la réalisation de deux extractions aqueuses, de préférence à l'aide d'un bain à ultrasons, puis d'un bain d'eau ;
c) la filtration de la phase liquide de la partie solide ;
d) le séchage de la partie solide pour fournir des particules de café.

5. Utilisation d'un système émulsifiant selon l'une quelconque des revendications 1 à 4, dans laquelle le produit alimentaire est un produit laitier, un produit de confiserie, un produit de confiserie congelé, un produit de soin pour animal de compagnie ou un produit de boisson.

6. Produit alimentaire **caractérisé en ce qu'**il comprend une émulsion stabilisée par 0,1 à 10 % en poids d'un système émulsifiant comprenant des particules de café, dans lequel les particules de café ont une taille moyenne de particules dans la plage allant de 10 µm à 30 µm, permettant de stabiliser une interface entre une phase grasse et une phase aqueuse d'un produit alimentaire, dans lequel la taille de particules est mesurée par des méthodes de diffraction laser, et dans lequel la taille moyenne de particules est la moyenne pondérée en volume (d_{4,3}).

7. Produit alimentaire selon la revendication 6, dans lequel les particules de café sont choisies parmi du café vert, du café torréfié et un mélange quelconque de ceux-ci.

8. Produit alimentaire selon l'une quelconque des revendications 6 ou 7, dans lequel les particules de café comprennent de 10 à 15 % en poids de matière sèche de protéines et de 10 à 20 % en poids de matière sèche de polysaccharides

9. Produit alimentaire selon l'une quelconque des revendications 6 à 8, dans lequel les particules de café peuvent être obtenues par un processus qui comprend :
a) le fait de moudre des grains de café dans de l'azote liquide
b) la réalisation de deux extractions aqueuses, de préférence à l'aide d'un bain à ultrasons, puis d'un bain d'eau ;
c) la filtration de la phase liquide de la partie solide ;
d) le séchage de la partie solide pour fournir des particules de café.

10. Produit alimentaire selon l'une quelconque des revendications 6 à 9, dans lequel le produit alimentaire est choisi parmi un produit laitier, un produit de confiserie, un produit de confiserie congelé, un produit de soin pour animal de compagnie ou un produit de boisson.

11. Produit alimentaire selon la revendication 10, dans lequel le produit alimentaire est un produit de confiserie.

12. Procédé de stabilisation de l'interface entre une phase grasse et une phase aqueuse d'un produit alimentaire, le procédé comprenant les étapes consistant à :
(i) fournir au moins une phase grasse ; au moins une phase aqueuse ; et un système émulsifiant comprenant des particules de café ont une taille moyenne de particules dans la plage allant de 10 µm à 30 µm, dans lequel la taille de particules est mesurée par des méthodes de diffraction laser, et dans lequel la taille moyenne de particules est la moyenne pondérée en volume (d_{4,3}) ;
(ii) disperser le système émulsifiant dans au moins une phase grasse, au moins une phase aqueuse, ou à la fois dans au moins une phase grasse et au moins une phase aqueuse ;
(iii) homogénéiser l'au moins une phase aqueuse et l'au moins une phase grasse afin de former une émulsion.
